# EUROPÄISCHE PATENTSCHRIFT

(11) **EP 1 532 021 B1**
(45) Veröffentlichungstag und Bekanntmachung des Hinweises auf die Patenterteilung: **23.04.2008**
(21) Anmeldenummer: 03718605.3
(22) Anmeldetag: 24.02.2003
(51) Int. Cl.: B60R 21/01

(54) **VORRICHTUNG ZUR AUFPRALLSENSIERUNG MIT WENIGSTENS ZWEI DRUCKSENSOREN**
DEVICE FOR COLLISION DETECTION WITH AT LEAST TWO PRESSURE SENSORS
DISPOSITIF POUR DETECTER DES CHOCS AU MOYEN DE DEUX CAPTEURS DE PRESSION

(30) Priorität: 14.08.2002 DE 10237160
(43) Veröffentlichungstag der Anmeldung: 25.05.2005
(73) Patentinhaber: ROBERT BOSCH GMBH, 70442 Stuttgart (DE)
(72) Erfinder: ADAM, Boris, 71126 Gäufelden (DE); OHL, Christian, 72793 Pfullingen (DE)
(86) Internationale Anmeldenummer: PCT/DE2003/000562
(87) Internationale Veröffentlichungsnummer: WO 2004/018263

(56) Entgegenhaltungen:
- DE-A- 3 637 165
- DE-A- 10 112 194
- US-A- 5 748 075

## Beschreibung

### Stand der Technik

Die Erfindung geht aus von einer Vorrichtung zur Aufprallsensierung mit wenigstens zwei Drucksensoren nach der Gattung des unabhängigen Patentanspruchs.

Es ist aus der nicht vorveröffentlichten deutschen Patentanmeldung DE 102 101 31.0 bekannt, neben Differenzdruckwerten auch Absolutdruckwerte zu übertragen

Aus dem Dokument US 5 748 075 A1 ist eine Vorrichtung nach dem Oberbegriff des Anspruch 1 bekannt.

### Vorteile der Erfindung

Die erfindungsgemäße Vorrichtung zur Aufprallsensierung mit wenigstens zwei Drucksensoren mit den Merkmalen des unabhängigen Patentanspruchs hat demgegenüber den Vorteil, dass die Druckwerte der Drucksensoren der erfindungsgemäßen Vorrichtung nun auch anderen Fahrzeugsystemen zur Verfügung gestellt werden können. Dafür ist die erfindungsgemäße Vorrichtung mit diesen anderen Fahrzeugsystemen beispielsweise über einen Bus verbunden, um auch diesen Fahrzeugsystemen die Druckwerte zu übertragen. Die anderen Fahrzeugsysteme können dabei diese Druckwerte zur Plausibilisierung von eigenen Sensorwerten und/oder als Ersatz für einen nicht vorhandenen Sensor verwenden. Damit ist eine kostengünstige Mehrfachnutzung der Drucksignale der Drucksensoren zur Aufprallerkennung möglich. Der zusätzliche Hardwareaufwand ist gering, da eine Schnittstelle oder ein Bussystem zu anderen Fahrzeugsystemen meistens bereits vorhanden ist. Es führt dazu, dass bei den anderen Fahrzeugsystemen Drucksensoren eingespart werden können. Dies vereinfacht auch die Konzeption der elektronischen Systeme in einem Fahrzeug.

Durch die in den abhängigen Ansprüchen aufgeführten Maßnahmen und Weiterbildungen sind vorteilhafte Verbesserungen der im unabhängigen Patentanspruch angegebenen Vorrichtung zur Aufprallsensierung möglich.

Besonders vorteilhaft ist, dass das wenigstens eine weitere Fahrzeugsystem ein Einspritzsystem, eine Klimaregelung und/oder eine Barometerfunktion ist. Auch eine auf Druck basierende Höhenmessung kann von der erfindungsgemäßen Vorrichtung profitieren.

Der Druckwert kann zu den anderen Fahrzeugsystemen dabei vorteilhafter Weise als Absolutdruckwert oder als ein Differenzdruckwert übertragen werden.

### Zeichnung

Ausführungsbeispiele der Erfindung sind in der Zeichnung dargestellt und werden in der nachfolgenden Beschreibung näher erläutert.

Es zeigen
- Figur 1: ein Blockschaltbild der erfindungsgemäßen Vorrichtung und
- Figur 2: ein Flussdiagramm des Ablaufs auf der erfindungsgemäßen Vorrichtung.

### Beschreibung

Drucksensoren sind aus der Industrie und Automobilanwendung bekannt. Je nach Ausführung werden dabei von den Drucksensoren Absolutdruck- oder Differenzdruckwerte zu einer Auswerteeinheit übertragen. Im Automobil werden die Sensoren üblicherweise für die Motorsteuerung und die Seitencrashsensierung bzw. eine Airbagauslösung eingesetzt.

Erfindungsgemäß wird vorgeschlagen, die Druckwerte, die durch die für die Aufprallsensierung vorhandenen Sensoren fortwährend aufgenommen bzw. an das Steuergerät geliefert werden, auch anderen Fahrzeugsystemen verfügbar zu machen.

Damit können u.U. Drucksensoren eingespart werden oder in anderen Fahrzeugsystemen vorhandene Drucksensoren auf Plausibilität überprüft werden.

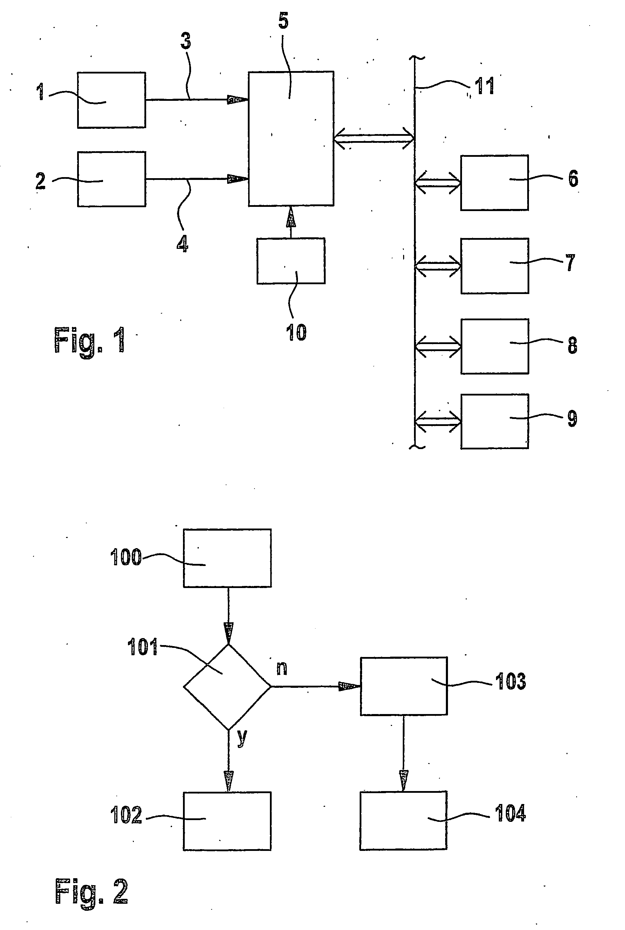

Figur 1 zeigt als Blockschaltbild die erfindungsgemäße Vorrichtung. Zwei Drucksensoren 1 und 2, die zur Aufprallsensierung verwendet werden, werden über jeweilige Leitungen 3 und 4 mit einem Prozessor 5 verbunden. Der Prozessor 5 erhält über einen dritten Dateneingang Signale von einem Beschleunigungssensor 10, der zur Plausibilität der Drucksensorsignale der Sensoren 1 und 2 dient. Über einen Datenein-/ausgang ist der Prozessor 5 mit einem Bus 11 verbunden, an den weitere Fahrzeugsysteme 6 bis 9 angeschlossen sind. Dabei ist das Fahrzeugsystem 6 ein Einspritzsystem, das Fahrzeugsystem 7 eine Klimaregelung, das Fahrzeugsystem 8 eine Barometerfunktion mit Bordcomputer und das Fahrzeugsystem 9 ein Höhenmesser.

Die Drucksensoren 1 und 2 sind als mikromechanische Drucksensoren ausgebildet, die hier zur Seitenaufprallsensierung dienen und damit in einem Seitenteil des Fahrzeugs angeordnet sind. Das Seitenteil ist dabei weitgehend geschlossen, so dass die Drucksensoren 1 und 2 bei einem Seitenaufprall einen adiabatischen Druckanstieg durch die Verformung des Seitenteils erfassen. Damit ist eine sehr schnelle Seitenaufprallsensierung durch die Drucksensoren 1 und 2 möglich. Die Drucksensoren 1 und 2 dienen daher als indirekte Verformungssensoren.

Es ist alternativ oder zusätzlich möglich, Drucksensoren auch in der Stoßstange oder im Heck einzusetzen, um auch dort einen Aufprall über einen adiabatischen Druckanstieg zu erfassen. Zur Seitenaufprallsensierung können mehr als zwei Sensoren verwendet werden. Die Verwendung von wenigstens zwei Sensoren ermöglicht jedoch, dass durch die Auswertung der Signale die über die Leitungen 3 und 4 zum Prozessor übertragen werden, eine gegenseitige Überprüfung der Funktionsfähigkeit der Drucksensoren 1 und 2 gewährleistet ist. Die Drucksensoren 1 und 2 sind durch ihre Anordnung in den Seitenteilen, die gegenüberliegend sind, im Fahrzeug abgesetzt von einem Steuergerät angeordnet. Dabei weisen die Sensoren 1 und 2 Messverstärker, einen Analog-DigitalWandler und einen Senderbaustein auf, um die gemessenen Druckdaten zum Prozessor 5 zu übertragen. Hier ist eine unidirektionale Übertragung von den Sensoren 1 und 2 zum Prozessor 5 in einem Steuergerät vorgesehen. Die Leitungen 3 und 4 dienen dabei auch zur Stromversorgung der Drucksensoren 1 und 2, wobei die Drucksensoren auf diesen Gleichstrom zur Stromversorgung ihre Daten durch Amplitudenmodulation zum Prozessor 5 übertragen. Der Prozessor 5 hat dann jeweils für die Leitungen 3 und 4 einen Empfängerbaustein, um die empfangenen Daten zu empfangen. Alternativ ist es möglich, dass die Verbindung zwischen den Drucksensoren 1 und 2 und dem Prozessor bzw. Steuergerät 5 bidirektional ist, dass also das Steuergerät 5 auch Anfragen an die Drucksensoren 1 und 2 übertragen kann. Es ist weiterhin möglich, dass die Drucksensoren 1 und 2 nicht nur ihre Messdaten an das Steuergerät 5 bzw. den Prozessor übertragen, sondern schon ausgewertete Daten, beispielsweise Differenzdruckdaten der normierte Daten. Weiterhin ist es möglich, dass die Verbindung zwischen Drucksensoren 1 und 2 und dem Steuergerät 5 durch einen Bus realisiert ist, also einen Sensorbus. Dies würde dem Steuergerät 5 nur den Einsatz eines einzigen Buscontrollers ermöglichen und auch nur eine einzige Leitung, an die die Sensoren 1 und 2 angeschlossen sind. Der Beschleunigungssensor 10 ist hier als Plausibilitätssensor für einen Aufprall vorgesehen. D.h. nur, wenn auch der Beschleunigungssensor 10 einen Aufprall anzeigt, dann entscheidet der Prozessor 5 auf einen Aufprall und steuert hier nicht dargestellte Rückhaltemittel, wie Airbags und Gurtstraffer, an. Liegt jedoch kein Aufprall vor, dann überträgt das Steuergerät 5 die Druckdaten der beiden Sensoren 1 und 2 an die anderen Steuergeräte 6 bis 9. Diese verwenden die Druckdaten, um eigene Sensoren zu plausibilisieren oder um ihre Funktion mit diesen Druckdaten auszuführen. Insbesondere solche Komfortfunktionen wie die Klimaregelung 7, die Barometerfunktion 8 und der Höhenmesser 9 können auf einen eigenen Drucksensor verzichten und die Werte der Drucksensoren 1 und 2 verwenden.

Von der reinen Funktion kann auf den zusätzlichen, hier für die Plausibilität verwendeten Sensor 10 verzichtet werden, wenn die Beeinträchtigung der Funktion der übrigen, meist für den Komfort ausgelegten Fahrzeugsysteme 6-9 im Crashfall toleriert werden kann, bzw. wenn diese entsprechend gering ins Gewicht fällt.

Es ist ausserdem möglich, dass das Steuergerät 5 mit den Fahrzeugsystemen 6, 7, 8 und 9 jeweils über zwei Drahtverbindungen verbunden ist. Auch eine Funk- oder optische Verbindung ist hier machbar.

Figur 2 erläutert mittels eines Flussdiagramms den Ablauf auf dem Prozessor 5. In Verfahrensschritt 100 empfängt der Prozessor 5 die Druckdaten von den Sensoren 1 und 2. In Verfahrensschritt 101 überprüft der Prozessor 5 anhand des Signals des Beschleunigungssensors 10, ob ein Aufprall vorliegt. Zeigen sowohl die Druckdaten, als auch die Beschleunigungsdaten einen Seitenaufprall an, dann wird zu Verfahrensschritt 102 gesprungen und es werden Rückhaltemittel entsprechend der Aufprallschwere ausgelöst. Wurde jedoch im Verfahrensschritt 101 kein Aufprall erkannt, was der Normalfall ist, dann wird zu Verfahrensschritt 103 gesprungen und die Druckdaten der Sensoren 1 und 2 werden an die Fahrzeugkomponenten 6 bis 9 übertragen. In Verfahrensschritt 104 führen dann die Fahrzeugsysteme 6 bis 9 ihre Funktion mit den Druckdaten aus. Damit ist es vorteilhafter Weise möglich, dass die Fahrzeugsysteme 6 bis 9 Plausibilisierungen ihrer eigenen Messwerte durchführen oder diese Druckwerte für ihre eigenen Funktionen direkt verwenden.

## Patentansprüche

1. Vorrichtung zur Aufprallsensierung mit wenigstens zwei Drucksensoren (1, 2), wobei die Drucksensoren (1, 2) mit einem Prozessor (5) verbindbar sind, um jeweils wenigstens einen Druckwert zum Prozessor (5) zu übertragen, wobei der Prozessor (5) derart konfiguriert ist, dass der Prozessor (5) anhand des wenigstens einen Druckwerts die Aufprallsensierung durchführt, **dadurch gekennzeichnet, dass** der Prozessor (5) mit wenigstens einem weiteren Fahrzeugsystem (6 bis 9) derart verbindbar ist, dass der wenigstens eine Druckwert zu dem wenigstens einen weiteren Fahrzeugsystem (6 bis 9) übertragbar ist.

2. Vorrichtung nach Anspruch 1, **dadurch gekennzeichnet, dass** das wenigstens eine weitere Fahrzeugsystem (6 bis 9) ein Einspritzsystem (6), eine Klimaregelung (7) und/oder eine Barometerfunktion (8) und/oder eine Höhenmessfunktion (9) ist.

3. Vorrichtung nach Anspruch 1 oder 2, **dadurch gekennzeichnet, dass** das wenigstens eine weitere Fahrzeugsystem (6 bis 9) derart konfiguriert ist, dass der wenigstens eine Druckwert zur Plausibilisierung verwendbar ist.

4. Vorrichtung nach Anspruch 1 oder 2, **dadurch gekennzeichnet, dass** das wenigstens eine weitere Fahrzeugsystem (6 bis 9) derart konfiguriert ist, dass es seine Funktion in Abhängigkeit von dem wenigstens einen Druckwert steuert.

5. Vorrichtung nach einem der vorherigen Ansprüche, **dadurch gekennzeichnet, dass** der wenigstens eine Druckwert ein Absolutdruckwert oder ein Differenzdruckwert ist.

## Claims

1. Device for collision detection with at least two pressure sensors (1, 2), wherein the pressure sensors (1, 2) can be connected to a processor (5) in order to transmit in each case at least one pressure value to the processor (5), wherein the processor (5) is configured in such a way that the processor (5) carries out the sensing of a collision by reference to the at least one pressure value, **characterized in that** the processor (5) can be connected to at least one further vehicle system (6 to 9) in such a way that the at least one pressure value can be transmitted to the at least one further vehicle system (6 to 9).

2. Device according to Claim 1, **characterized in that** the at least one further vehicle system (6 to 9) is an injection system (6), an air-conditioning controller (7) and/or a barometer function (8) and/or an altitude measuring function (9).

3. Device according to Claim 1 or 2, **characterized in that** the at least one further vehicle system (6 to 9) is configured in such a way that the at least one pressure value can be used for checking plausibility.

4. Device according to Claim 1 or 2, **characterized in that** the at least one further vehicle system (6 to 9) is configured in such a way that it controls its function in accordance with the at least one pressure value.

5. Device according to one of the preceding claims, **characterized in that** the at least one pressure value is an absolute pressure value or a differential pressure value.

## Revendications

1. Dispositif pour détecter des chocs avec au moins deux capteurs (1, 2),
les capteurs (1, 2) étant reliés à un processeur (5) pour transmettre chaque fois au moins une valeur de pression au processeur (5),
le processeur (5) étant configuré pour qu'à l'aide d'au moins une valeur de pression, il effectue une détection de chocs,
**caractérisé en ce que**
le processeur (5) peut être relié à au moins un autre système du véhicule (6-9) pour qu'au moins une valeur de pression soit transmise à au moins un autre système (6-9) du véhicule.

2. Dispositif selon la revendication 1,
**caractérisé en ce qu'**
au moins un autre système du véhicule (6-9) est un système d'injection (6), une installation de climatisation (7) et/ou une fonction de baromètre (8) et/ou une fonction de mesure d'altitude (9).

3. Dispositif selon l'une des revendications 1 ou 2,
**caractérisé en ce qu'**
au moins l'autre système du véhicule (6-9) est configuré pour utiliser au moins une valeur de pression pour un contrôle de plausibilité.

4. Dispositif selon l'une des revendications 1 ou 2,
**caractérisée en ce qu'**
au moins l'autre système du véhicule (6-9) est configuré pour commander sa fonction selon au moins une valeur de pression.

5. Dispositif selon l'une des revendications précédentes,
**caractérisée en ce qu'**
au moins une valeur de pression est une valeur de pression absolue ou une valeur de différence de pression.
